# EUROPEAN PATENT APPLICATION

(11) **EP 1 244 291 A2**
(43) Date of publication of application: **25.09.2002**
(21) Application number: 02005895.4
(22) Date of filing: 14.03.2002
(51) Int. Cl.: H04N 5/14, H04N 7/34

(54) **Moving image compression and cut detection**

(30) Priority: 16.03.2001 JP 2001075964
(71) Applicant: Kabushiki Kaisha Toshiba, Tokyo (JP)
(72) Inventor: Nakamura, Seiichi, c/o K. K. Toshiba, Int.Prop.Div, Tokyo 105-8001 (JP)
(74) Representative: Henkel, Feiler, Hänzel

(57) **Abstract**

The MPEG moving image compression apparatus (2) of this invention implements compression encoding of a moving image by utilizing DCT coding based on a spatial correlation, and motion-compensated inter-frame predictive coding based on a temporal correlation. During the motion-compensated inter-frame predictive coding process, a motion vector prediction unit (21) generates motion vector prediction data each of which indicates the moving amount of a given block in a frame. The MPEG moving image compression apparatus (2) simultaneously outputs the output from the motion vector prediction unit (21) as cut detection data (18) and compression encodes.

## Description

The present invention relates to a moving image compression apparatus for compression-encoding, e.g., a moving image received from a television broadcast, and saving the compressed image data as a file in a hard disk or the like, and a cut detection data generation method for the apparatus.

In recent years, various personal computers, such as a desktop type, notebook type, and the like have been developed. The processing performance of the CPU as the core of such personal computers has greatly improved, and incredible advances in information communication techniques and image processing techniques have been made. Recently, some personal computers may include a so-called "video recording function" for compression-encoding, e.g., a moving image received from a television broadcast, and saving the compressed image data as a file in a hard disk or the like.

Most of such moving image compression encoding processes are implemented according to MPEG (Moving Picture Experts Group). MPEG uses DCT (Discrete Cosine Transform) coding based on spatial correlation, and motion-compensated inter-frame predictive coding based on a temporal correlation, to achieve efficient, defect-free compression.

In motion-compensated inter-frame predictive coding, the difference between two successive frames, i.e., movement of each portion (block) in a frame, is detected, and that moving amount is recorded as motion vector prediction data. Using this data, n frames before and after a given frame can be reproduced based on image data of that frame. More specifically, motion-compensated inter-frame predictive coding can obviate the need for holding the total image data of all the frames, and can greatly reduce the quantity of data.

Since motion vector prediction data indicates the correlation between two time-series frames, it can be used as information for detecting a portion having no correlation, i.e., a scene change.

A process for generating data used to detect a scene change (a so-called "cut") is executed after a moving image from a television broadcast is saved. That is, after compression-encoded moving image data is saved as a file, a batch process for extracting motion vector prediction data is executed using that file as an input.

Since recent storage media have increased storage capabilities, the video recording time can be lengthened. However, as the video recording time has been lengthened, the post-process for cut detection, which is redundant, is prolonged.

The present invention has been made in consideration of the above situation, and has the advantage of providing a moving image compression apparatus which can efficiently detect a portion of an image having no correlation between two time-series images (a so-called "cut"), and a cut detection data generation method for that apparatus.

In order to achieve the above advantage, the moving image compression apparatus of the present invention can extract motion vector prediction data, which is generated at the time of moving image compression encoding. For this purpose, the present invention provides a moving image compression apparatus comprising: a moving image data input device configured to input moving image data; a compression encoding device configured to compression-encode the moving image data input by the moving image data input device; and a cut detection data output device configured to extract motion vector prediction data generated during the compression encoding of the compression encoding device at the time of compression encoding, and output the extracted motion vector prediction data as cut detection data.

The moving image compression apparatus of the present invention can complete extraction of motion vector prediction data simultaneously with compression encoding, unlike in a conventional apparatus which extracts motion vector prediction data for cut detection as a post-process of compression encoding.

The moving image compression apparatus of the present invention further comprises an acquisition ratio setting device which sets the acquisition ratio of the motion vector prediction data. Since such a user interface is provided, a so-called decimation process can be executed nearly simultaneously with compression encoding of the moving image in accordance with the user's intention.

This summary of the invention does not necessarily describe all necessary features so that the invention may also be a sub-combination of these described features.

The invention can be more fully understood from the following detailed description when taken in conjunction with the accompanying drawings, in which:
FIG. 1 is a schematic diagram showing the arrangement of a video recording system to which a moving image compression apparatus according to the first embodiment of the present invention is applied;
FIG. 2 is a block diagram showing the internal arrangement of an MPEG moving image compression apparatus of the first embodiment;
FIG. 3 is a view showing an example of the contents of a cut detection data file generated by the MPEG moving image compression apparatus of the first embodiment;
FIG. 4 is a block diagram showing an example of a video recording system built on a computer by implementing the MPEG moving image compression apparatus of the first embodiment as a semiconductor integrated circuit;
FIG. 5 is a block diagram showing an example of a video recording system built on a computer by implementing the MPEG moving image compression apparatus of the first embodiment as a program;
FIG. 6 is a block diagram showing the internal arrangement of an MPEG moving image compression apparatus according to the second embodiment of the present invention;
FIG. 7 shows a cut detection data acquisition condition setting window displayed by a cut detection data acquisition unit of the second embodiment;
FIG. 8 is a flow chart for explaining the operation sequence upon compression encoding by the moving image compression apparatus of the second embodiment;
FIG. 9 is a block diagram showing the internal arrangement of an MPEG moving image compression apparatus according to the third embodiment of the present invention; and
FIG. 10 shows an example of cut position data generated by the MPEG moving image compression apparatus of the third embodiment.

Embodiments of the present invention will be described hereinafter with reference to the accompanying drawings.

### (First Embodiment)

The first embodiment of the present invention will be described first.

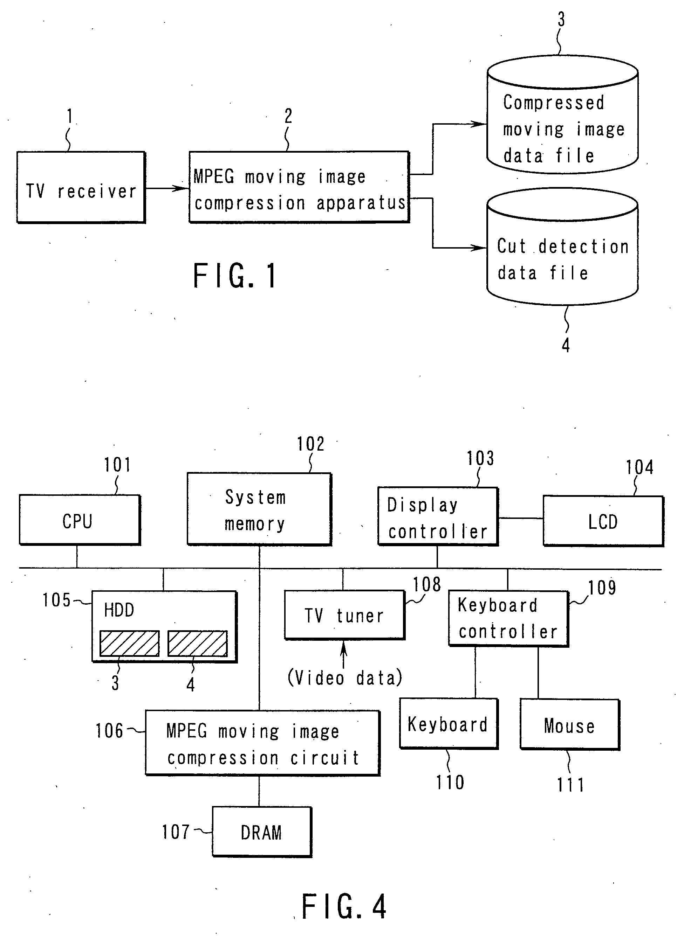

FIG. 1 shows a schematic arrangement of a video. recording system to which a moving image compression apparatus according to the first embodiment is applied.

As shown in FIG. 1, this video recording system comprises a TV (television broadcast) receiver 1, MPEG moving image compression apparatus 2, compressed moving image data files 3, and cut detection data files 4.

The TV receiver 1 receives a TV-broadcast moving image, and transfers it to the MPEG moving image compression apparatus 2. Upon receiving the moving image from the TV receiver 1, the MPEG moving image compression apparatus 2 executes compression encoding of this moving image according to MPEG. The MPEG moving image compression apparatus 2 saves compressed moving image data obtained by compression encoding in a recording device such as a hard disk or the like, as a file. The file created to store the compressed moving image data is the compressed moving image data file 3.

The MPEG moving image compression apparatus 2 saves motion vector prediction data generated during compression encoding in a recording device such as a hard disk or the like as a cut data detection data file at the time of compression encoding. The. file created to store this cut detection data is the cut detection data file 4. The characteristic feature of this MPEG moving image compression apparatus 2 lies in its ability to simultaneously generate cut detection data files 4 and compressed moving image data files 3. This will be explained in detail below.

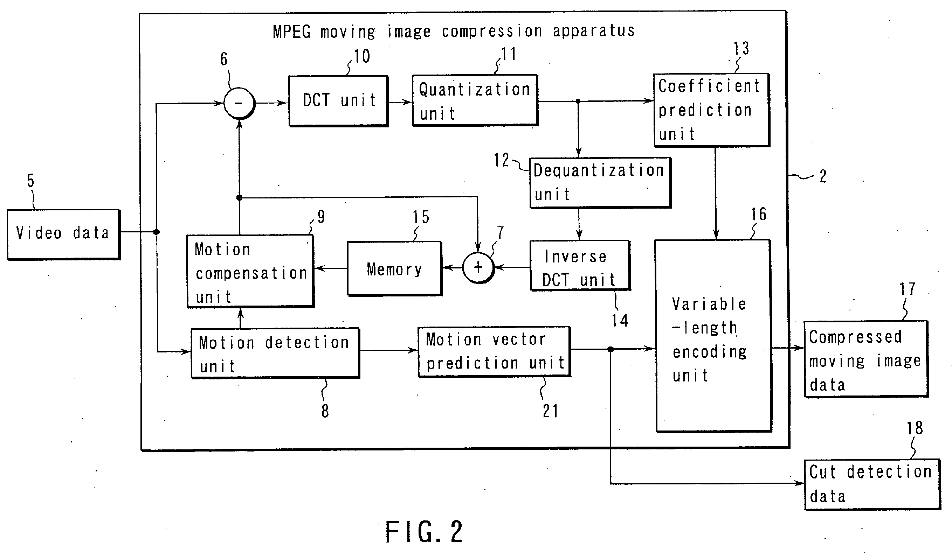

FIG. 2 shows the internal arrangement of the MPEG moving image compression apparatus 2. MPEG moving image compression apparatus 2 receives an input of video data 5. MPEG moving image compression apparatus 2 comprises subtractor 6, adder 7, motion detection unit 8, motion compensation unit 9, DCT unit 10, quantization unit 11, dequantization unit 12, coefficient prediction unit 13, inverse DCT unit 14, memory 15, variable-length encoding unit 16 and motion vector prediction unit 21. Compressed moving image data 17 is output from variable-length encoding unit 16.

The elements performing discrete cosine transforms, coefficient quantization, and variable length encoding are well known in the prior art. They are not part of the present invention and are not described in detail herein. In general, MPEG compression encoding executed by the MPEG moving image compression apparatus 2 uses DCT coding based on a spatial correlation, and motion-compensated inter-frame predictive coding based on a temporal correlation. In this motion-compensated inter-frame predictive coding, one frame is broken up into a plurality of blocks each consisting of n × n pixels, and motion vector prediction data which indicates the moving amount of each block on the next frame is generated. For example, when a 720 × 480 (dots) frame is broken up into 8 × 8 (pixels) blocks, 5,400 (= 90 × 60) motion vector prediction data are generated between two successive frames. A motion vector prediction unit 21 generates these motion vector prediction data.

If two successive frames do not largely differ, the motion vector prediction data of each block assumes a small value. On the other hand, if an object moves quickly, and two successive frames differ largely, the motion vector prediction data of each block assumes a large value. Furthermore, when the scene changes, if each block does not appear in the next frame, the motion vector prediction data of each block is given a predetermined value indicating the scene change.

That is, each piece of motion vector prediction data indicates a correlation between two successive frames, and is used as information for detecting a portion having no correlation, i.e., a scene change. Conventionally, after a compressed moving image data file 3 is generated, motion vector prediction data is extracted from the compressed moving image data stored in the compressed moving image data file 3 as a post-process, thus generating the cut detection data file 4. That is, during this process, video recording cannot continue.

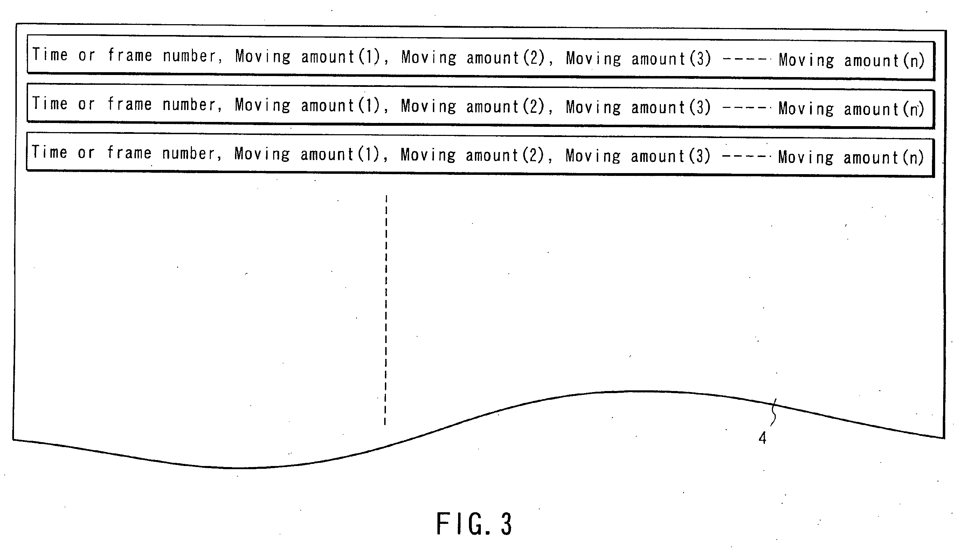

To solve this problem, the MPEG moving image compression apparatus 2 can acquire the output from the motion vector prediction unit 21 and output it as cut detection data 18. That is, a cut detection data file 4 can be generated simultaneously with the generation of a compressed moving image data file 3. FIG. 3 shows an example of the contents of a cut detection data file 4 generated by the MPEG moving image compression apparatus 2.

As shown in FIG. 3, in the cut detection data file 4, one record is generated in correspondence with one frame, and each record consists of a time or frame number indicating the position of that frame, and the moving amounts of respective blocks.

In this way, even if the video recording time is prolonged, extraction of motion vector prediction data for cut detection can be completed almost simultaneously with video recording, and the efficiency of the cut detection process can be greatly improved, compared to a conventional apparatus.

Note that the cut detection data file 4 generated in this way is used later as an input file of a cut detection device that performs cut detection of moving image data stored in the compressed moving image data file 3.

This cut detection device sequentially receives cut detection data stored in the cut detection data file 4, and determines a cut position where the correlation between two successive frames is low. This condition exists when the moving amount determined by the number of blocks given a predetermined value (indicating that the block of interest does not appear in the next frame) exceeds a predetermined threshold value, or when the sum total of the moving amounts of respective blocks exceeds a predetermined threshold value.

This cut detection device can obviate the need for extracting motion vector prediction data from moving image data stored in the compressed moving image data file 3, as is conventionally practiced. Hence, the response time of the cut detection process can be greatly improved.

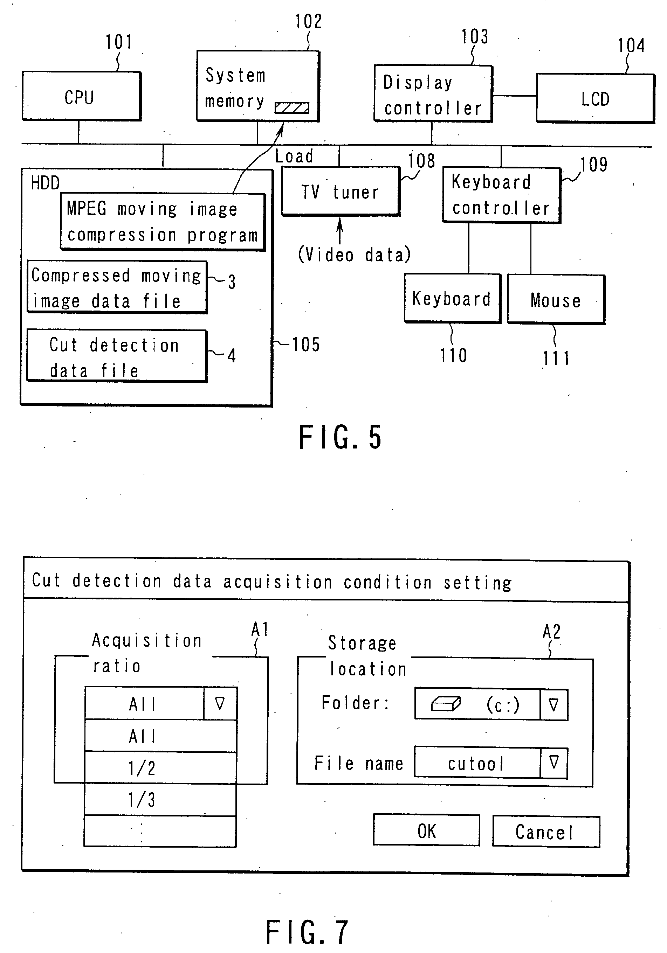

The video recording system of this embodiment can be built into, e.g., a computer. In this case, the MPEG moving image compression apparatus 2 can be implemented as hardware, as a semiconductor integrated circuit, or as software, as a program that executes a compression encoding process with a CPU. FIG. 4 shows an example of a video recording system built into a computer, utilizing the MPEG moving image compression apparatus 2 as a semiconductor integrated circuit, and FIG. 5 shows an example of a video recording system in a computer, utilizing the MPEG moving image compression apparatus 2 as a program.

As shown in FIG. 4, a computer, which implements the MPEG moving image compression apparatus 2 as a semiconductor integrated circuit, comprises a CPU 101, system memory 102, display controller 103, LCD (liquid crystal display device) 104, HDD (hard disk drive) 105, MPEG moving image compression circuit 106, DRAM 107, TV (television broadcast) tuner 108, keyboard controller 109, keyboard 110, and mouse 111.

The CPU 101 controls the whole computer, and drives the respective units in accordance with the program stored in the system memory 102. The system memory 102 is a memory device which serves as a main memory of this computer, and stores the program that controls the CPU 101, data used in the program, and the like.

The display controller 103 is a device which controls output of a user interface in this computer, and controls the LCD 104 to display image data generated by the CPU 101. The HDD 105 is a large-capacity memory device which serves as an auxiliary memory of this computer, and stores programs to be loaded onto the system memory 102, data, and the like.

The MPEG moving image compression circuit 106 is an MPEG moving image compression apparatus realized through a semiconductor integrated circuit. The circuit 106 receives moving images via a bus, compression-encodes the input moving image, and outputs compressed image data to the DRAM 107. The MPEG moving image compression circuit 106 simultaneously outputs motion vector prediction data generated during this compression encoding process to the DRAM 107. Furthermore, the MPEG moving image compression circuit 106 reads out the output compressed moving image data and motion vector prediction data from the DRAM 107, and outputs them onto the bus. The DRAM 107 is a memory device which is used as a work area of the MPEG moving image compression circuit 106.

The TV tuner 108 is a device for receiving television broadcasts, and outputs received moving images onto the bus. The keyboard controller 109 is a device which controls input of the user interface in this computer, converts the operation contents of the keyboard 110 and mouse 111 into numerical value data, and passes them to the CPU 101.

In the video recording system of this computer, a moving image received by the TV tuner 108 is transferred to the MPEG moving image compression circuit 106 via the bus, and compressed image data and cut detection data generated by the MPEG moving image compression circuit 106 are temporarily saved in the DRAM 107. After that, the compressed image data and cut detection data are transferred to the HDD 105 via the bus and system memory 102, and are stored in the HDD 105 as compressed image data files 3 and cut detection data files 4.

On the other hand, as shown in FIG. 5, in a computer in which a video recording system implementing MPEG moving image compression is realized by a program, this program is stored in the HDD 105. This program inputs moving image data from the bus. The program is loaded from the HDD 105 onto the system memory 102, and through the CPU 101, executes compression encoding. Then, compressed moving image data and cut detection data generated by this compression encoding process are saved as compressed image data files 3 and cut detection files 4 in the HDD 105.

In this manner, an MPEG moving image compression apparatus 2 can be realized by either hardware, as a semiconductor integrated circuit, or software, as a program, thus a video recording system can be made available in a computer.

### (Second Embodiment)

The second embodiment of the present invention will be described below.

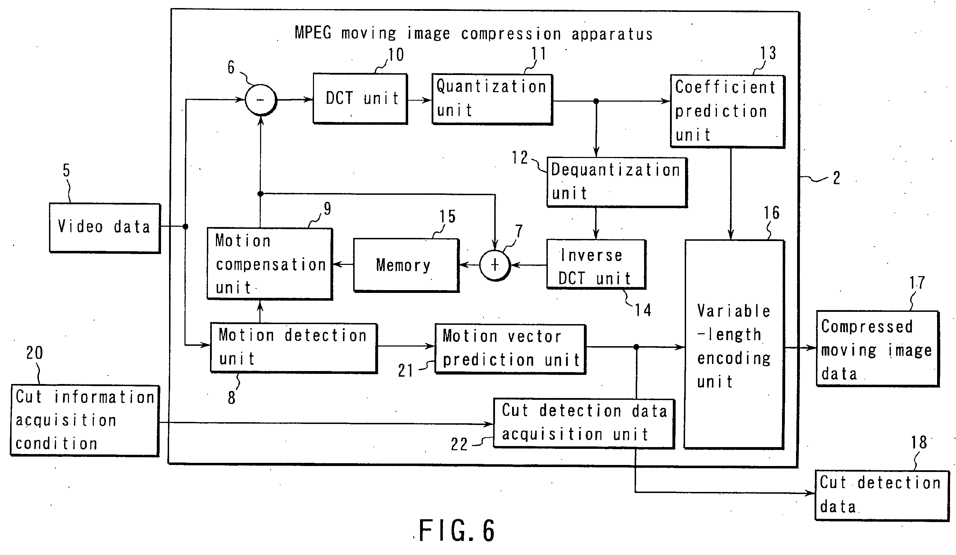

A moving image compression apparatus according to the second embodiment is applied to a video recording system having the schematic arrangement shown in FIG. 1, as in the first embodiment. Hence, a description of the video recording system will be omitted. FIG. 6 shows the internal arrangement of the MPEG moving image compression apparatus 2, wherein like numerals designate corresponding parts in FIG. 2.

As shown in FIG. 6, the MPEG moving image compression apparatus 2 of the second embodiment has an arrangement obtained by adding a cut detection data acquisition unit 22 to the MPEG moving image compression apparatus 2 of the first embodiment.

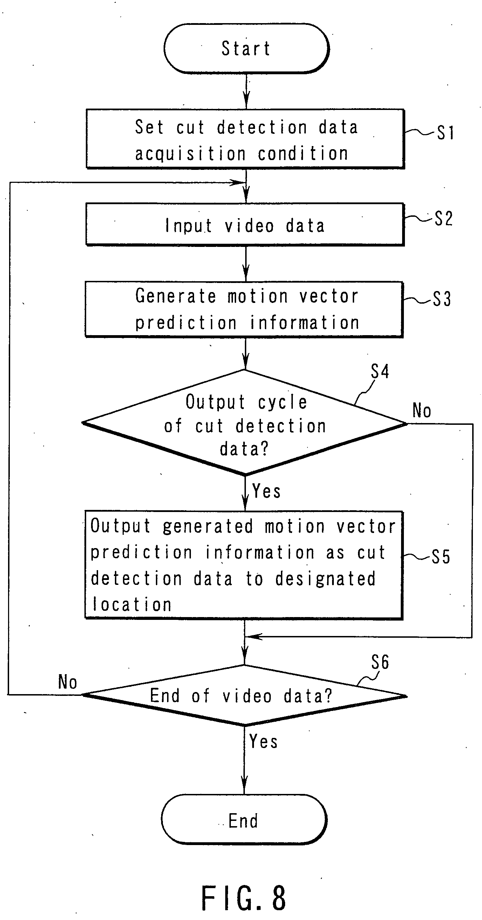

The cut detection data acquisition unit 22 provides a user interface for setting the acquisition ratio of motion vector prediction data output from the motion vector prediction unit 21, i.e., the acquisition ratio of cut detection data. A cut information acquisition condition 20 may be set for the cut detection data acquisition unit 22. FIG. 7 shows the cut detection data acquisition condition setting window displayed by this cut detection data acquisition unit 22. The user sets the acquisition ratio of cut detection data (A1 in FIG. 7), and the storage location (A2 in FIG. 7) of the cut detection data file 4 on this window.

The acquisition ratio A1 may be set to "all" for acquiring all motion vector prediction data. The acquisition ratio A1 may instead be set to "1/n" for acquiring one piece of motion vector prediction data every n time-series frames (n can be arbitrarily designated). The storage location A2 designates a storage device, directory, and name upon generating the cut detection data file 4 using "folder" and "file name". The cut detection data acquisition unit 22 holds the contents set on this cut detection data acquisition condition setting window as the cut detection data acquisition conditions.

After that, when the TV receiver 1 begins to receive a television broadcast, and the received moving image is transferred, the MPEG moving image compression apparatus 2 starts MPEG compression encoding. Simultaneously with this compression encoding, the cut detection data acquisition unit 22 acquires motion vector prediction data output from the motion vector prediction unit 21 on the basis of the cut detection data acquisition condition set previously, and holds them as cut detection data at the designated storage location.

For example, when the acquisition ratio "1/3" is set, the cut detection data acquisition unit 22 acquires one piece of motion vector prediction data output from the motion vector prediction unit 21 every three frames. Note that the cut detection data acquisition unit 22 temporarily fetches all motion vector prediction data output from the motion vector prediction unit 21, and then outputs one piece of cut detection data every three frames.

In this manner, since the user interface for setting the acquisition ratio of motion vector prediction data is provided, a so-called decimation process can be executed nearly simultaneously with compression encoding of a corresponding moving image, in accordance with the user's intention.

FIG. 8 is a flow chart for explaining the operation sequence upon compression encoding by this moving image compression apparatus.

The acquisition ratio of motion vector prediction data generated during moving image compression encoding is set (step S1). A moving image received from a television broadcast is input (step S2), and motion vector prediction data is generated as one process of compression encoding of this moving image (step S3).

It is then determined whether, based on the previously set acquisition ratio, the generated motion vector prediction data of interest is output as cut detection data (step S4). If YES in step S4, the motion vector prediction data of interest is output as cut detection data (step S5).

If the next moving image is present (NO in step S6), the process from step S2 is repeated; otherwise (YES in step S6), this process ends.

In this way, this moving image compression apparatus can generate a cut detection data file 4 simultaneously with generation of a compressed moving image data file 3, and also simultaneously execute a so-called decimation process, in accordance with the user's intention.

### (Third Embodiment)

The third embodiment of the present invention will be described below.

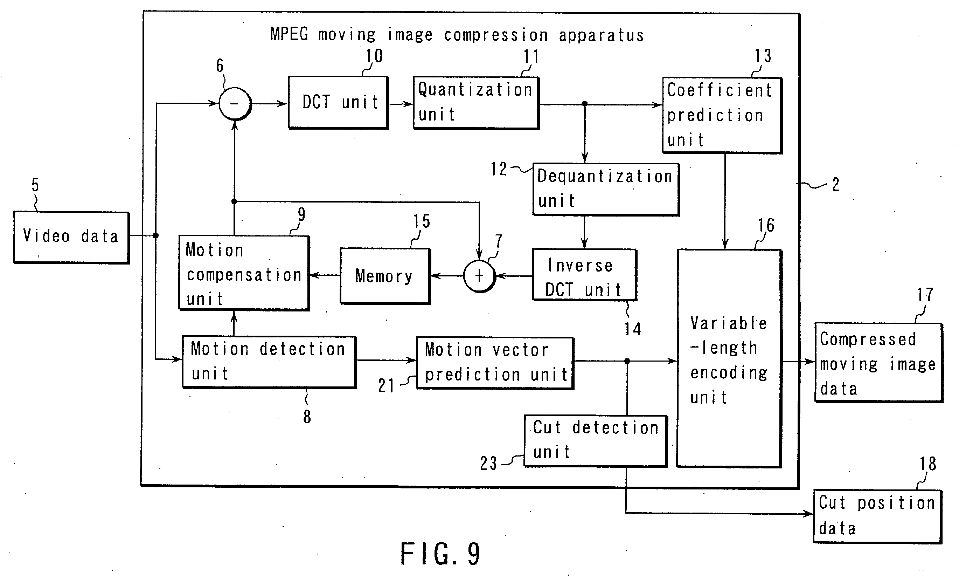

FIG. 9 shows the internal arrangement of the MPEG moving image compression apparatus 2 according to the third embodiment, wherein like numerals designate corresponding parts in FIGS. 2 and 6.

The MPEG moving image compression apparatus 2 of the third embodiment comprises a cut detection unit 23 in place of the cut detection data acquisition unit 22 of the MPEG moving image compression apparatus 2 of the second embodiment, as shown in FIG. 6.

The cut detection unit 23 has a cut detection function of the cut detection device described in the first embodiment, and outputs cut position data indicating the cut position of compressed moving image data.

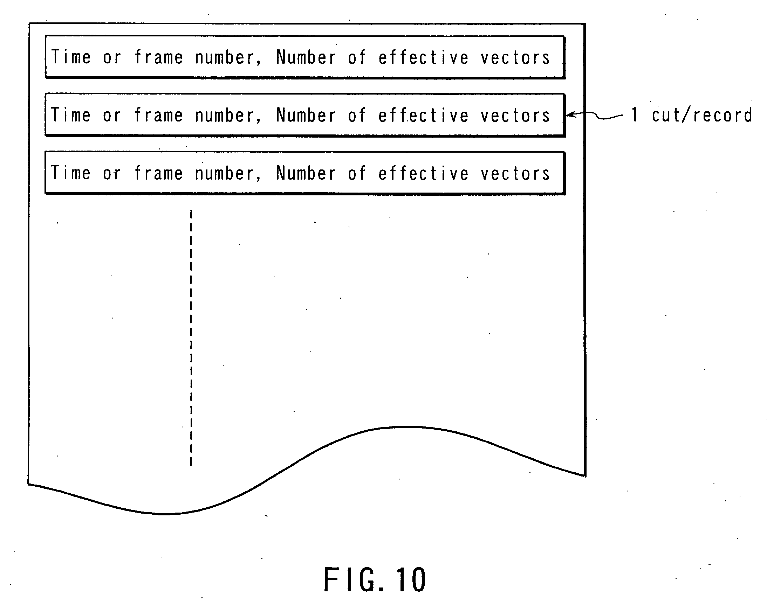

The cut detection unit 23 acquires motion vector prediction data output from the motion vector prediction unit 21, determines a cut position where the correlation between two successive frames is low, when the number of blocks detected from the two frames, i.e., the number of blocks given with effective moving amounts (vectors) is smaller than a predetermined threshold value, and outputs an identification number (time or frame number) or the number of blocks of the latter one of these two frames as cut position data. FIG. 10 shows an example of cut position data output from the cut detection unit 23.

When a zero threshold value is given to this cut detection unit 23, cut detection data is generated for nearly all frames. In this case, since each record stores the number of effective vectors, this format is effective for generating cut position data. That is, when this cut position data is used later, the number of cuts of the entire image can be controlled depending on the purpose of use at that time by increasing/decreasing the threshold value with which the number of effective vectors is to be compared.

As described above, according to the MPEG moving image compression apparatus 2 of the third embodiment, cut detection of a moving image can be executed parallel to compression encoding of the moving image.

## Claims

1. A moving image compression apparatus **characterized by** comprising:
a moving image data input device for inputting moving image data;
a compression encoding device (9) for compression-encoding the moving image data input by said moving image data input device; and
a cut detection data output device (21) for extracting motion vector prediction data generated during a compression encoding process of said compression encoding device at the time of the compression encoding process, and output the extracted motion vector prediction data as cut detection data.

2. An apparatus according to claim 1, **characterized in that** said cut detection data output device (21) comprises a motion vector prediction unit for generating said motion vector prediction data.

3. An apparatus according to claim 1, **characterized in that** said cut detection data output device (21) extracts the motion vector prediction data at a predetermined ratio.

4. An apparatus according to claim 1, **characterized by** further comprising:
an acquisition ratio setting device for setting an acquisition ratio of the motion vector prediction data,
wherein said cut detection data output device (21) extracts the motion vector prediction data in accordance with the acquisition ratio set by said acquisition ratio setting device.

5. A moving image compression integrated circuit which is used in a computer and is connected to a bus arranged on a system board, **characterized by** comprising:
a data input unit for inputting moving image data from the bus;
a compression encoding unit (9) for compression-encoding the moving image data input by said moving image data input unit;
a cut detection data acquisition unit (22) for extracting, as cut detection data, motion vector prediction data generated during a compression encoding process of said compression encoding unit (9) at the time of the compression encoding process; and
a data output unit for outputting the moving image data compression-encoded by said compression encoding unit (9) and the cut detection data extracted by said cut detection data acquisition unit (22) to the bus.

6. A circuit according to claim 5, **characterized in that** said cut detection data acquisition unit (22) extracts the motion vector prediction data at a predetermined ratio.

7. A circuit according to claim 5, **characterized by** further comprising:
an acquisition ratio setting unit for setting an acquisition ratio of the motion vector prediction data,
wherein said cut detection data acquisition unit (22) extracts the motion vector prediction data in accordance with the acquisition ratio set by said acquisition ratio setting unit.

8. A moving image compression apparatus **characterized by** comprising:
a moving image data input device for inputting moving image data;
a compression encoding device (9) for compression-encoding the moving image data input by said moving image data input device; and
a cut position data output device (21) for extracting motion vector prediction data generated during a compression encoding process of said compression encoding device (9) at the time of the compression encoding process, determine a correlation between two time-series frames from the extracted motion vector prediction data, detect a cut of the moving image data from the determined correlation, and output cut position data indicating a position of the cut.

9. An apparatus according to claim 8, **characterized in that** said cut position data output device (21) comprises a motion vector prediction unit for generating said motion vector prediction data.

10. A cut detection data generation method of a moving image compression apparatus, **characterized by** comprising the steps of:
inputting moving image data;
compression-encoding the input moving image data; and
extracting motion vector prediction data generated during compression encoding at the time of compression encoding, and outputting the extracted motion vector prediction data as cut detection data.

11. A method according to claim 10, **characterized in that** outputting the cut detection data includes extracting the motion vector prediction data at a predetermined ratio.

12. A method according to claim 10, further comprising the steps of:
setting an acquisition ratio of the motion vector prediction data,
wherein outputting the cut detection data includes extracting the motion vector prediction data in accordance with the set acquisition ratio.

13. A cut position data generation method of a moving image compression apparatus, **characterized by** comprising the steps of:
inputting moving image data;
compression-encoding the input moving image data; and
extracting motion vector prediction data generated during a compression encoding process at the time of the compression encoding process, determining a correlation between two time-series frames from the extracted motion vector prediction data, detecting a cut of the moving image data from the determined correlation, and outputting cut position data indicating a position of the cut.

14. A cut detection apparatus **characterized by** comprising:
an input device for inputting cut detection data including motion vector prediction data, which are generated during compression encoding of moving image data;
a determination device for determining a correlation between two time-series frames from the cut detection data input by said input device; and
a cut detection device for detecting a cut of the moving image data based on of the determined correlation of said determination device.

15. A cut detection method of a cut detection apparatus, **characterized by** comprising the steps of:
inputting cut detection data including motion vector prediction data, which are generated during compression encoding of moving image data;
determining a correlation between two time-series frames from the input cut detection data; and
detecting a cut of the moving image data on the basis of the determined correlation.

16. A computing device **characterized by** comprising:
a processor programmed to:
input moving image data;
compression-encode the input moving image data;
extract motion vector prediction data generated during compression encoding at the time of compression encoding; and
output the extracted motion vector prediction data as cut detection data.

17. The computing device according to claim 16, **characterized in that** outputting the cut detection data includes extracting the motion vector prediction data at a predetermined ratio.

18. The computing device according to claim 16, **characterized in that** the processor is further programmed to set an acquisition ratio of the motion vector prediction data, and
wherein outputting the cut detection data includes extracting the motion vector prediction data in accordance with the set acquisition ratio.

19. A computer **characterized by** comprising:
a processor programmed to:
input moving image data;
compression-encode the input moving image data; and
extract motion vector prediction data generated during a compression encoding process at the time of the compression encoding process;
determine a correlation between two time-series frames from the extracted motion vector prediction data;
detect a cut of the moving image data from the determined correlation; and
output cut position data indicating a position of the cut.

20. A computer **characterized by** comprising:
a processor programmed to:
input cut detection data including motion vector prediction data, which are generated during compression encoding of moving image data;
determine a correlation between two time-series frames from the input cut detection data; and
detect a cut of the moving image data on the basis of the determined correlation.
